# DEMANDE DE BREVET EUROPEEN

(11) **EP 1 279 428 A1**
(43) Date de publication de la demande: **29.01.2003**
(21) Numéro de dépôt: 02291805.6
(22) Date de dépôt: 17.07.2002
(51) Int. Cl.: B01D 3/00, B01D 3/32

(54) **Procédé et dispositif d'introduction d'un mélange liquide-vapeur dans une colonne de distillation cylindrique à alimentation radiale**

(30) Priorité: 26.07.2001 FR 0109993
(71) Demandeur: TOTAL RAFFINAGE DISTRIBUTION S.A., 92800 Puteaux (FR)
(72) Inventeur: Vedrine, Denis, 76600 Le Havre (FR)
(74) Mandataire: Jolly, Jean-Pierre

(57) **Abrégé**

La présente invention concerne un procédé et un dispositif d'introduction d'un mélange liquide-vapeur dans une colonne de distillation cylindrique (1) à alimentation radiale.

Le procédé selon l'invention consiste à séparer le mélange liquide-vapeur en deux flux (6, 7) opposés horizontaux, puis à orienter lesdits flux vers la partie inférieure (4) de la colonne (1) pour réduire les entraînements de liquide vers la partie supérieure (5) de la colonne.

Le dispositif pour la mise en oeuvre du procédé de l'invention comporte des moyens (9a, 9b) de séparation du mélange liquide-vapeur en deux flux opposés horizontaux et des moyens d'orientation des dits flux vers la partie inférieure de la colonne qui coopèrent pour réduire les entraînements de liquide vers la partie supérieure de la colonne.

L'invention trouve son application dans l'industrie pétrolière notamment dans les raffineries de pétrole brut ainsi que dans la chimie et la pétrochimie.

## Description

### DOMAINE TECHNIQUE

La présente invention concerne un procédé et un dispositif d'introduction d'un mélange liquide-vapeur dans une colonne de distillation cylindrique à alimentation radiale.

Elle trouve son application dans l'industrie pétrolière, notamment dans les raffineries de pétrole brut, ainsi que dans la chimie et la pétrochimie.

### ETAT DE LA TECHNIQUE ANTERIEURE

Typiquement, les colonnes de distillation atmosphérique et sous vide de pétrole brut ou d'hydrocarbures lourds comportent à leur partie supérieure une zone de lavage, dite "wash-zone" en langue anglaise, à leur partie inférieure une zone de rectification, dite "stripping zone" en langue anglaise, et à leur partie médiane une zone de détente dite "flash zone" en langue anglaise, dans laquelle est introduit un mélange liquide-vapeur à distiller.

Quand la séparation des phases vapeur et liquide dans la zone de détente est incomplète, des gouttelettes de liquide sont entraînées avec la vapeur dans la zone de lavage.

Ces entraînements de gouttelettes ont pour conséquence la formation de coke sur les plateaux qui équipent les colonnes.

Ces entraînements peuvent aussi causer des noircissements des produits de la distillation comme c'est le cas des gazoles en sortie des colonnes de distillation atmosphérique des unités de viscoréduction.

Pour limiter de tels entraînements, il est connu d'introduire la charge liquide-vapeur dans la colonne au travers d'une corne d'entrée reliée au conduit d'arrivée tangentielle de cette charge.

Cette corne, placée à l'intérieur de la colonne, épouse la forme en arc de cercle de la paroi interne de la colonne.

Elle forme un conduit, qui comporte une paroi intérieure et une paroi extérieure reliées par une plaque supérieure, ayant une première extrémité fermée et une deuxième extrémité ouverte reliée au conduit d'arrivée du mélange liquide-vapeur.

A l'intérieur de cette corne, entre les parois intérieure et extérieure est montée une pluralité de déflecteurs de forme incurvée à leur partie supérieure verticale.

Ces déflecteurs sont décalés verticalement de plus en plus haut entre l'entrée ouverte de la corne et son extrémité fermée.

Le but recherché est que la vapeur et le liquide qui constituent la charge de la colonne entrent en contact avec les déflecteurs et soient orientés vers le bas au travers du fond ouvert de la corne, d'où la vapeur remonte vers la zone de lavage tandis que le liquide s'écoule vers le bas dans la zone d'enrichissement.

Une amélioration de ce dispositif est décrite dans le brevet US 4,770,747, qui consiste à monter, à l'intérieur de la corne, des déflecteurs qui orientent la partie liquide de la charge de la colonne horizontalement vers la paroi de la colonne et la partie vapeur vers la zone d'enrichissement.

Ce dispositif amélioré n'est pas utilisable pour les colonnes à alimentation radiale.

### EXPOSE DE L'INVENTION

La présente invention a précisément pour but de remédier à cet inconvénient et de fournir un procédé et un dispositif utilisables avec des colonnes de distillation cylindriques à alimentation radiale, pour réduire les entraînements de gouttelettes vers les parties supérieures de ces colonnes.

A cette fin, elle propose un procédé d'introduction d'un mélange liquide-vapeur dans une colonne de distillation cylindrique à alimentation radiale, comportant une partie inférieure et une partie supérieure, qui consiste à séparer le mélange liquide-vapeur en deux flux opposés horizontaux puis à orienter lesdits flux vers la partie inférieure de la colonne.

Elle propose aussi un dispositif d'introduction d'un mélange liquide-vapeur dans une colonne de distillation cylindrique à alimentation radiale, comportant une partie inférieure et une partie supérieure, dispositif qui comporte des moyens de séparation du mélange liquide-vapeur en deux flux opposés horizontaux et des moyens d'orientation desdits flux vers la partie inférieure de la colonne, lesdits moyens coopérant pour réduire les entraînements de liquide vers la partie supérieure de la colonne.

Selon une autre caractéristique du dispositif de l'invention, le mélange liquide vapeur arrivant par une conduite d'alimentation radiale, les moyens de séparation du mélange liquide-vapeur comportent une boite de déflexion en forme de T, munie d'une entrée, d'une première et d'une deuxième sortie symétriques, ladite boite de déflexion étant raccordée par son entrée à la conduite d'alimentation et montée de manière à ce que les flux traversant la première et la deuxième sortie forment les deux flux opposés horizontaux de mélange liquide-vapeur.

Dans une forme de réalisation du dispositif de l'invention, les moyens d'orientation des flux comportent une première corne de distribution en forme d'arc de cercle, ayant une extrémité amont et un fond ouverts, disposée horizontalement le long de la paroi intérieure de la colonne, une deuxième corne de distribution en forme d'arc de cercle, ayant une extrémité amont et un fond ouverts, disposée horizontalement le long de la paroi intérieure de la colonne, cette première et cette deuxième corne étant placées symétriquement par rapport au plan vertical passant par l'axe de la conduite d'alimentation, l'extrémité amont de la première corne de distribution et l'extrémité amont de la deuxième corne de distribution étant respectivement raccordées aux moyens de séparation du flux de mélange liquide-vapeur.

Dans une autre forme de réalisation du dispositif de l'invention, les moyens d'orientation des flux comportent une première corne de distribution en forme d'arc de cercle, ayant une extrémité amont et un fond ouverts, disposée le long de la paroi intérieure de la colonne et orientée vers le bas, une deuxième corne de distribution en forme d'arc de cercle, ayant une extrémité amont et un fond ouverts, disposée le long de la paroi intérieure de la colonne et orientée vers le bas, cette première et cette deuxième corne étant placées symétriquement par rapport au plan vertical passant par l'axe de la conduite d'alimentation, l'extrémité amont de la première corne de distribution et l'extrémité amont de la deuxième corne de distribution étant respectivement raccordées aux moyens de séparation du flux de mélange liquide-vapeur.

Selon une troisième forme de réalisation du dispositif de l'invention, les moyens d'orientation des flux comportent une première corne de distribution en forme d'arc de cercle, ayant une extrémité amont ouverte et un fond fermé comportant une pluralité d'ouvertures, disposée horizontalement le long de la paroi intérieure de la colonne, une deuxième corne de distribution en forme d'arc de cercle ayant une extrémité amont ouverte et un fond fermé comportant une pluralité d'ouvertures, disposée horizontalement le long de la paroi intérieure de la colonne, cette première et cette deuxième corne étant placées symétriquement par rapport au plan vertical passant par l'axe de la conduite d'alimentation, l'extrémité amont de la première corne de distribution et l'extrémité amont de la deuxième cornes de distribution étant respectivement raccordées aux moyens de séparation du flux de mélange liquide-vapeur.

Enfin, dans une quatrième forme de réalisation du dispositif de l'invention, les moyens d'orientation des flux comportent une première corne de distribution en forme d'arc de cercle, ayant une extrémité amont ouverte et un fond fermé comportant une pluralité d'ouvertures, disposée le long de la paroi intérieure de la colonne et orientée vers le bas, une deuxième corne de distribution en forme d'arc de cercle ayant une extrémité amont ouverte et un fond fermé comportant une pluralité d'ouvertures, disposée le long de la paroi intérieure de la colonne et orientée vers le bas, cette première et cette deuxième cornes étant placées symétriquement par rapport au plan vertical passant par l'axe de la conduite d'alimentation, l'extrémité amont de la première corne de distribution et l'extrémité amont de la deuxième corne de distribution étant respectivement raccordées aux moyens de séparation du flux de mélange liquide-vapeur.

Selon une caractéristique du dispositif de l'invention, celui-ci comporte, en plus, un séparateur de flux placé à l'intérieur de la boite de déflexion, dans l'axe de la conduite d'alimentation, de manière à améliorer la séparation en deux flux du mélange liquide-vapeur.

Selon une autre caractéristique du dispositif de l'invention, les première et deuxième cornes comportent une pluralité d'éléments déflecteurs montés entre leurs parois latérales, disposés de manière à ce que chacun d'eux dévie une partie du fluide en direction du fond de chaque corne, pour distribuer de façon régulière le fluide à l'intérieur de la colonne.

Toujours selon une caractéristique du dispositif de l'invention, les cornes de distribution comportent une pluralité de déflecteurs de forme incurvée à leur partie supérieure, ces déflecteurs étant disposés de manière à ce que leurs bords de fuite soient inclinés d'un angle inférieur à 45 degrés par rapport à la verticale.

Enfin, selon une dernière caractéristique du dispositif de l'invention, la surface de passage du mélange liquide-vapeur au travers du fond de chaque corne de distribution est comprise entre 0,8 et 3 fois la surface de la section droite de la conduite d'alimentation.

### BREVE DESCRIPTION DES DESSINS

L'invention sera mieux comprise à l'aide des dessins annexés dans lesquels :
- la figure 1 représente une colonne de distillation équipée d'un dispositif conforme à l'invention,
- la figure 2 représente un premier mode de réalisation d'un dispositif conforme à l'invention,
- la figure 3 représente un deuxième mode de réalisation d'un dispositif conforme à l'invention,
- la figure 4 représente une corne de distribution équipée de déflecteurs, dont les bords de fuite sont inclinés par rapport à la verticale,
- la figure 5 représente un séparateur de flux monté dans une boîte de déflexion.

### EXPOSE DETAILLE DE L'INVENTION

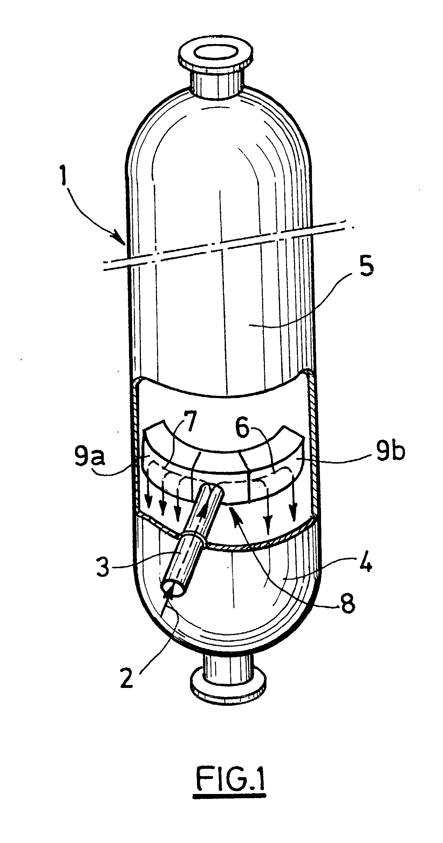

La figure 1 représente, en vue partiellement écorchée une colonne 1 de distillation cylindrique équipée d'un dispositif d'introduction d'un mélange liquide-vapeur 2 à distiller.

Le mélange liquide-vapeur 2 arrive par la conduite 3 d'alimentation radiale située entre la partie 5 supérieure de la colonne et la partie 4 inférieure. La conduite 3 d'alimentation radiale est raccordée à des moyens 8 de séparation du mélange 2 en deux flux 6 et 7 horizontaux opposés.

Ces deux flux 6 et 7 entrent respectivement dans des moyens 9a et 9b d'orientation vers la partie 6 inférieure de la colonne 1.

Grâce aux moyens 8 de séparation et aux moyens 9a et 9b d'orientation, le mélange liquide-vapeur qui arrive radialement à la colonne 1 est projeté de haut en bas à la périphérie intérieure de la colonne, où il se sépare en gaz et en liquide sous forme de gouttelettes. Ainsi, la remontée du gaz par la partie centrale de la colonne est facilitée et s'effectue avec des entraînements réduits de gouttelettes de liquide par rapport à une alimentation radiale de la colonne sans dispositif d'introduction.

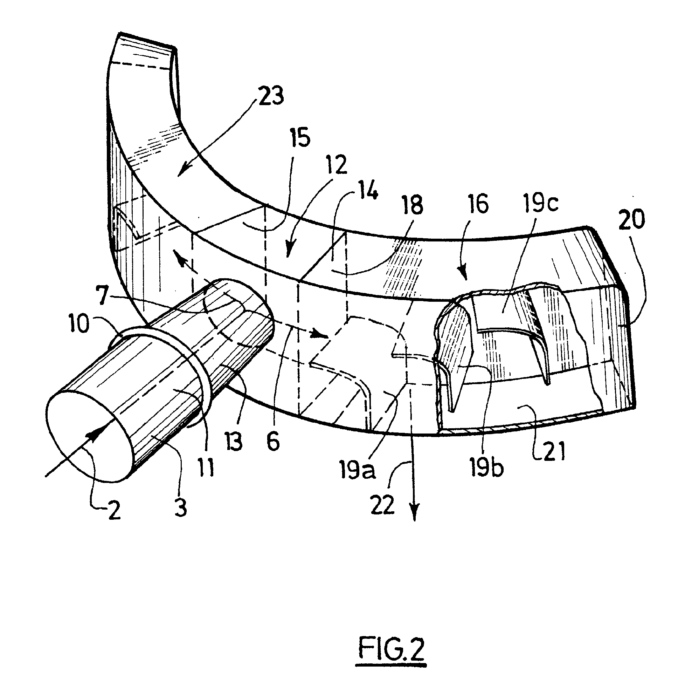

Selon un premier mode de réalisation du dispositif de l'invention représenté sur la figure 2, le mélange liquide-vapeur 2 arrive par la conduite 3 d'alimentation radiale de la colonne (non représentée sur cette figure 2). La conduite 3 est raccordée au moyen d'une bride 10 à l'entrée 11 de la boite de déflexion 12 en forme de T, qui comprend une partie 13 de forme cylindrique, qui correspond à la barre verticale du T, et une partie de forme sensiblement parallélépipédique, qui correspond à la barre horizontale du T. Une des extrémités ouvertes de la partie 13 de forme cylindrique constitue l'entrée 11 de la boite de déflexion. La partie de forme sensiblement parallélépipédique présente deux faces vides, qui constituent les deux sorties 14 et 15 de la boite 12 déflexion.

Le mélange liquide-vapeur 2 qui arrive par la conduite 3 traverse la partie 13 cylindrique de la boite de déflexion 12 et entre dans la partie de forme sensiblement parallélépipédique, où il se sépare en deux flux 6 et 7 opposés horizontaux de mélange liquide-vapeur.

Le flux 6 de mélange liquide-vapeur entre dans la corne de distribution 16 par son extrémité 18 amont ouverte. Cette corne 16 a une forme d'arc de cercle, pour épouser la forme de la paroi interne de la colonne, le long de laquelle elle est montée horizontalement, et elle comporte entre ses parois latérales des déflecteurs 19a, 19b et 19c.

Le flux 6 est séparé en plusieurs flux par les déflecteurs. Les flux ainsi formés sont déviés par les parties plates des déflecteurs et par l'extrémité 20 aval de la corne 16 et ils sortent verticalement de celle-ci par le fond 21 ouvert sous la forme de flux tels que le flux 22.

Une deuxième corne 23, placée symétriquement à la corne 16 par rapport au plan vertical passant par l'axe de la conduite 3 d'alimentation, agit sur le flux 7 de la même manière que la corne 16.

Grâce au dispositif de l'invention, le mélange-liquide vapeur est distribué à l'intérieur de la colonne de façon homogène sous forme de gouttelettes de liquide et de gaz, l'ensemble étant animé d'une vitesse verticale qui favorise l'écoulement des gouttelettes à la périphérie de la colonne vers sa partie inférieure et la remontée du gaz par la partie centrale. La séparation liquide-gaz est ainsi assurée, ce qui se traduit par des entraînements réduits de gouttelettes de liquide par le gaz vers la partie supérieure de la colonne.

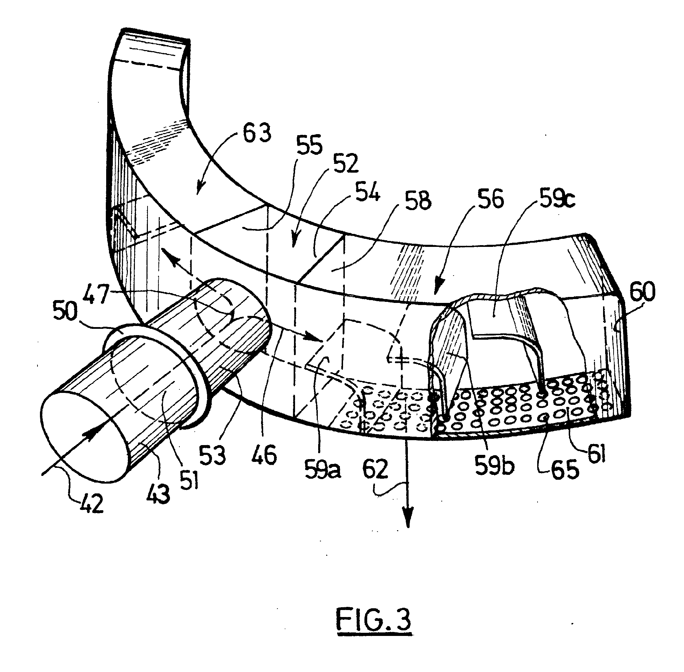

Selon un deuxième mode de réalisation du dispositif de l'invention représenté sur la figure 3, le mélange liquide-vapeur 42 arrive par la conduite 43 d'alimentation radiale de la colonne (non représentée sur cette figure 3). La conduite 43 est raccordée au moyen d'une bride 50 à l'entrée 51 de la boite de déflexion 52 en forme de T, qui comprend une partie 53 de forme cylindrique qui correspond à la barre verticale du T, et une partie de forme sensiblement parallélépipédique, qui correspond à la barre horizontale du T. Une des extrémités ouverte de la partie 53 de forme cylindrique constitue l'entrée 51 de la boite de déflexion. La partie de forme sensiblement parallélépipédique présente deux faces vides, qui constituent les deux sorties 54 et 55 de la boite 52 déflexion.

Le mélange liquide-vapeur 42 qui arrive par la conduite 43 traverse la partie 53 cylindrique de la boite de déflexion 52 et entre dans la partie de forme sensiblement parallélépipédique, où il se sépare en deux flux 46 et 47 opposés horizontaux de mélange liquide-vapeur.

Le flux 46 de mélange liquide-vapeur entre dans la corne de distribution 56 par son extrémité 58 amont ouverte. Cette corne 56 a une forme d'arc de cercle pour épouser la forme de la paroi interne de la colonne, le long de laquelle elle est montée horizontalement, et elle comporte entre ses parois latérales des déflecteurs 59a, 59b et 59c.

Le flux 46 est séparé en plusieurs flux par les déflecteurs. Les flux ainsi formés sont déviés par les parties plates verticales des déflecteurs et par l'extrémité 60 aval de la corne 56 et ils sortent verticalement de celle-ci par le fond 61 muni d'une pluralité d'ouvertures 65, sous la forme de flux tels que le flux 62.

Une deuxième corne 63 placée symétriquement à la corne 56 par rapport au plan vertical passant par l'axe de la conduite 43 d'alimentation agit sur le flux 47 de la même manière que la corne 56.

Comme avec le dispositif selon le premier mode de réalisation, le mélange-liquide vapeur est distribué à l'intérieur de la colonne de façon homogène sous forme de gouttelettes de liquide et de gaz, l'ensemble étant animé d'une vitesse verticale qui favorise l'écoulement des gouttelettes à la périphérie de la colonne vers sa partie inférieure et la remontée du gaz par la partie centrale. La séparation liquide-gaz est ainsi assurée, ce qui se traduit par des entraînements réduits de gouttelettes de liquide par le gaz vers la partie supérieure de la colonne.

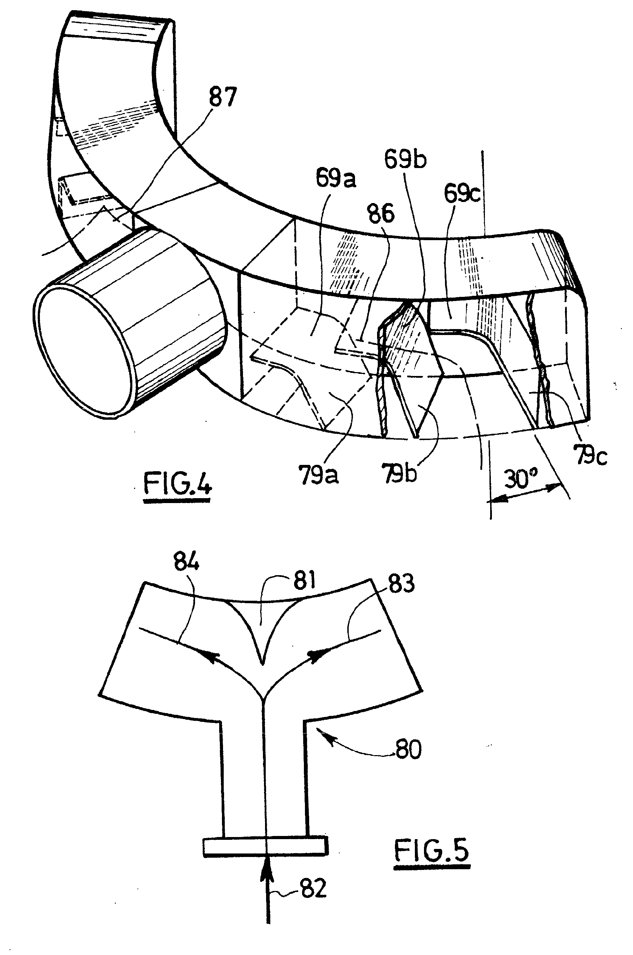

Selon un mode de réalisation représenté sur la figure 4, les déflecteurs 69a, 69b et 69c présentent des bords de fuite 79a, 79b et 79c, inclinés d'un angle de 30 degrés par rapport à la verticale.

Grâce à cette forme des déflecteurs, les flux horizontaux 86 et 87 sont déviés progressivement ce qui facilite leurs écoulements et évite les cassures de gouttelettes, ce qui se traduit par une diminution supplémentaire des remontées de gouttelettes dans la zone de lavage de la colonne.

La figure 5 représente une vue en coupe d'une boite de déflexion 80 munie d'un élément déflecteur 81 disposé dans l'axe de pénétration du flux 82 de mélange liquide-vapeur, qui facilite la formation des deux flux 83 et 84 horizontaux.

Pour chacun des modes de réalisation décrits ci-dessus la surface d'occupation du dispositif de l'invention est inférieure à 30% de la surface de la section de passage de la colonne ce qui évite les fortes survitesses du mélange liquide-vapeur dans la zone de détente lesquelles favorisent l'entraînement de gouttelettes dans la zone de lavage.

### EXEMPLE

Un moyen pour apprécier l'efficacité du procédé et du dispositif de l'invention consiste à comparer les valeurs de paramètres représentatifs du phénomène de remontées de gouttelettes de liquide calculés pour une colonne équipée d'un dispositif d'introduction de mélange liquide-vapeur selon l'invention, avec les mêmes paramètres calculés pour la même colonne non équipée.

A titre d'exemple, on a choisi une colonne de distillation atmosphérique d'une unité de viscoréduction, d'une hauteur totale de 33 m, de diamètre intérieur 2,47 m, la charge étant introduite radialement à la hauteur de 9 m par une conduite de diamètre 457,2 mm, le niveau de référence étant celui du fond de la colonne.

Les caractéristiques de la charge sont données dans le Tableau 1 ci-après.

**TABLEAU 1**

| Caractéristiques de la charge | |
|---|---|
| Paramètres | Valeurs |
| Débit | 3 400 tonnes / jour |
| Densité de la phase gazeuse | 5,9 kg / m3 |
| Viscosité de la phase gazeuse dans la zone de détente | 0,0141 mPa.s |
| Densité de la phase liquide | 690 kg /m³ |
| Viscosité de la phase liquide | 0,24 mPa.s |

On trouvera dans le Tableau 2 ci-après les valeurs de la vitesse moyenne de la phase gazeuse mesurées à 10, 11 et 12 mètres et, dans le Tableau 3, les valeurs de la masse spécifique moyenne de la phase entraînée sous forme de gouttelettes issues de l'entrée de la charge.

**TABLEAU 2**

| Vitesse moyenne de la phase gazeuse en mètres par seconde | | |
|---|---|---|
| Hauteur en mètres | Sans dispositif d'introduction | Avec dispositif d'introduction selon l'invention |
| 10 | 1,46 | 0,67 |
| 11 | 1,07 | 0,56 |
| 12 | 0,88 | 0,55 |

**TABLEAU 3**

| Masse spécifique moyenne de la phase entraînée sous forme de en kg/m³ gouttelettes issues de l'entrée de la charge | | |
|---|---|---|
| Hauteur en mètres | Sans dispositif d'introduction | Avec dispositif d'introduction conforme à l'invention |
| 9 | 0,770 | 0,130 |
| 10 | 0,291 | 0,088 |
| 11 | 0,111 | 0,044 |

Il apparaît clairement, à la lecture de des Tableaux 2 et 3, que la vitesse moyenne du gaz et la densité moyenne des gouttelettes issues de l'entrée de charge sont sensiblement réduites aux différentes hauteurs considérées, grâce au dispositif de l'invention, et par conséquent que les entraînements de gouttelettes de liquide vers la partie supérieure de la colonne sont également réduits.

## Revendications

1. Procédé d'introduction d'un mélange liquide-vapeur dans une colonne (1) de distillation cylindrique à alimentation radiale comportant une partie(4) inférieure et une partie (5) supérieure, **caractérisé en ce qu'**il consiste à séparer le mélange (2) liquide-vapeur en deux flux (6 et 7) opposés horizontaux puis à orienter lesdits flux vers la partie (4) inférieure de la colonne (1) pour réduire les entraînements de liquide vers la partie (5) supérieure de la colonne.

2. Dispositif d'introduction d'un mélange liquide-vapeur dans une colonne (1) de distillation cylindrique à alimentation radiale comportant une partie (4) inférieure et une partie (5) supérieure, **caractérisé en ce qu'**il comporte des moyens (8) de séparation du mélange (2) liquide-vapeur en deux flux (6 et 7) opposés, horizontaux et des moyens (9a et 9b) d'orientation desdits flux vers la partie (4) inférieure de la colonne(1), lesdits moyens coopérant pour réduire les entraînements de liquide vers la partie (5) supérieure de la colonne.

3. Dispositif selon la revendication 2, **caractérisé en ce que** le mélange (2) liquide vapeur arrivant par une conduite (3) d'alimentation radiale, les moyens (8) de séparation du mélange liquide-vapeur comportent une boite (12) de déflexion en forme de T, munie d'une entrée (11), d'une première et d'une deuxième sorties (14, 15) symétriques, ladite boite (12) de déflexion étant raccordée par son entrée (11) à la conduite (3) d'alimentation et montée de manière à ce que les flux traversant la première et la deuxième sortie forment les deux flux (6 et 7) opposés horizontaux de mélange liquide-vapeur.

4. Dispositif selon la revendication 2 ou 3, **caractérisé en ce que** les moyens (9a et 9b) d'orientation des flux (6 et 7) comportent une première corne (16) de distribution en forme d'arc de cercle, ayant une extrémité (18) amont et un fond (21) ouverts, disposée horizontalement le long de la paroi intérieure de la colonne, une deuxième corne (23) de distribution en forme d'arc de cercle, ayant une extrémité amont et un fond ouverts, disposée horizontalement le long de la paroi intérieure de la colonne, cette première et cette deuxième cornes (16 et 23) étant placées symétriquement par rapport au plan vertical passant par l'axe de la conduite (3) d'alimentation, l'extrémité amont de la première corne (16) de distribution et l'extrémité amont de la deuxième corne (21) de distribution étant respectivement raccordées aux moyens (8) de séparation du flux de mélange liquide-vapeur.

5. Dispositif selon la revendication 2 ou 3, **caractérisé en ce que** les moyens d'orientation des flux comportent une première corne (16) de distribution en forme d'arc de cercle, ayant une extrémité (18) amont et un fond (21) ouverts, disposée le long de la paroi intérieure de la colonne et orientée vers le bas, une deuxième corne (23) de distribution en forme d'arc de cercle, ayant une extrémité amont et un fond ouverts, disposée le long de la paroi intérieure de la colonne et orientée vers le bas, cette première et cette deuxième cornes étant placées symétriquement par rapport au plan vertical passant par l'axe de la conduite (3) d'alimentation, l'extrémité amont de la première corne (16) de distribution et l'extrémité amont de la deuxième corne (21) de distribution étant respectivement raccordées aux moyens (8) de séparation du flux de mélange liquide-vapeur.

6. Dispositif selon la revendication 2 ou 3, **caractérisé en ce que** les moyens d'orientation des flux (46, 47) comportent une première corne (56) de distribution en forme d'arc de cercle, ayant une extrémité (58) amont ouverte et un fond (51) fermé comportant une pluralité d'ouvertures (65), disposée horizontalement le long de la paroi intérieure de la colonne, une deuxième corne (63) de distribution en forme d'arc de cercle ayant une extrémité amont ouverte et un fond fermé comportant une pluralité d'ouvertures, disposée horizontalement le long de la paroi intérieure de la colonne, cette première et cette deuxième cornes (56, 63) étant placées symétriquement par rapport au plan vertical passant par l'axe de la conduite d'alimentation, l'extrémité amont de la première corne (56) de distribution et l'extrémité amont de la deuxième corne (65) de distribution étant respectivement raccordées aux moyens (8) de séparation du flux de mélange liquide-vapeur.

7. Dispositif selon la revendication 2 ou 3, **caractérisé en ce que** les moyens d'orientation des flux (46, 47) comportent une première corne (56)de distribution en forme d'arc de cercle, ayant une extrémité (58) amont ouverte et un fond (61) fermé comportant une pluralité d'ouvertures (65), disposée le long de la paroi intérieure de la colonne et orientée vers le bas, une deuxième corne (63) de distribution en forme d'arc de cercle ayant une extrémité amont ouverte et un fond fermé comportant une pluralité d'ouvertures, disposée le long de la paroi intérieure de la colonne et orientée vers le bas, cette première et cette deuxième cornes (56, 63) étant placées symétriquement par rapport au plan vertical passant par l'axe de la conduite d'alimentation, l'extrémité amont de la première corne (58) de distribution et l'extrémité amont de la deuxième corne (63) de distribution étant respectivement raccordées aux moyens (8) de séparation du flux de mélange liquide-vapeur.

8. Dispositif selon une quelconque des revendications 2 à 7, **caractérisé en ce qu'**il comporte en plus, un séparateur de flux (81) placé à l'intérieur de la boite de déflexion (80) dans l'axe de la conduite d'alimentation, de manière à améliorer la séparation en deux flux du mélange liquide-vapeur.

9. Dispositif selon une quelconque des revendications 4 à 8, **caractérisé en ce que** les première (16, 56) et deuxième cornes (23, 63) comportent une pluralité d'éléments déflecteurs (19a, 19b, 19c ; 59a, 59b, 59c) montés entre leurs parois latérales, disposés de manière à ce que chacun d'eux dévie une partie du fluide en direction du fond (21, 61) de chaque corne pour distribuer de façon régulière le fluide à l'intérieur de la colonne.

10. Dispositif selon une quelconque des revendications 4 à 9, **caractérisé en ce que** les cornes de distribution comportent une pluralité de déflecteurs (69a, 69b, 69c) de forme incurvée à leur partie supérieure, ces déflecteurs étant disposés de manière à ce que leurs bords de fuite (79a, 79b, 79c) soient inclinés d'un angle inférieur à 45 degrés par rapport à la verticale.

11. Dispositif selon une quelconque des revendications 4 à 9, **caractérisé en ce que** la surface de passage du mélange liquide-vapeur au travers du fond (21) de chaque corne de distribution (56, 63) est comprise entre 0,8 et 3 fois la surface de la section droite de la conduite (43) d'alimentation.
